# EUROPEAN PATENT SPECIFICATION

(11) **EP 2 432 279 B1**
(45) Date of publication and mention of the grant of the patent: **29.11.2017**
(21) Application number: 09847513.0
(22) Date of filing: 31.12.2009
(51) Int. Cl.: H04W 36/00, H04W 48/20, H04W 84/04

(54) **METHOD AND SYSTEM FOR USER EQUIPMENT SELECTING A HOME NODE**
METHOD AND SYSTEM FOR USER EQUIPMENT SELECTING A HOME NODE
PROCÉDÉ ET SYSTÈME POUR UN ÉQUIPEMENT UTILISATEUR SÉLECTIONNANT UN N UD DOMESTIQUE

(30) Priority: 21.07.2009 CN 200910089722
(43) Date of publication of application: 21.03.2012
(73) Proprietor: ZTE Corporation, Shenzhen, Guangdong 518057 (CN)
(72) Inventor: MAO, Lei, Shenzhen Guangdong 518057 (CN); ZHANG, Junfeng, Shenzhen Guangdong 518057 (CN); AI, Jianxun, Shenzhen Guangdong 518057 (CN); WANG, Guanzhou, Shenzhen Guangdong 518057 (CN)
(74) Representative: Nikolov, Nikolay Dontchev
(86) International application number: PCT/CN2009/076342
(87) International publication number: WO 2011/009279

(56) References cited:
- EP-A1- 1 732 269
- WO-A1-2008/019534
- WO-A1-2008/088592
- CN-A- 1 917 694
- CN-A- 101 394 665
- US-A1- 2007 047 498
- US-A1- 2007 047 512
- US-A1- 2007 047 512

## Description

### Technical Field

The present invention relates to Long Term Evolution Advanced technology (LTE-A), and especially, to a method and system for selecting a home node for user equipment.

### Background of the Related Art

To increase the covering gain of the cell border and implement blind spot supplement effect, the Relay and Coordinated Multipoint transmission/reception (CoMP) technology is introduced in LTE-A system.

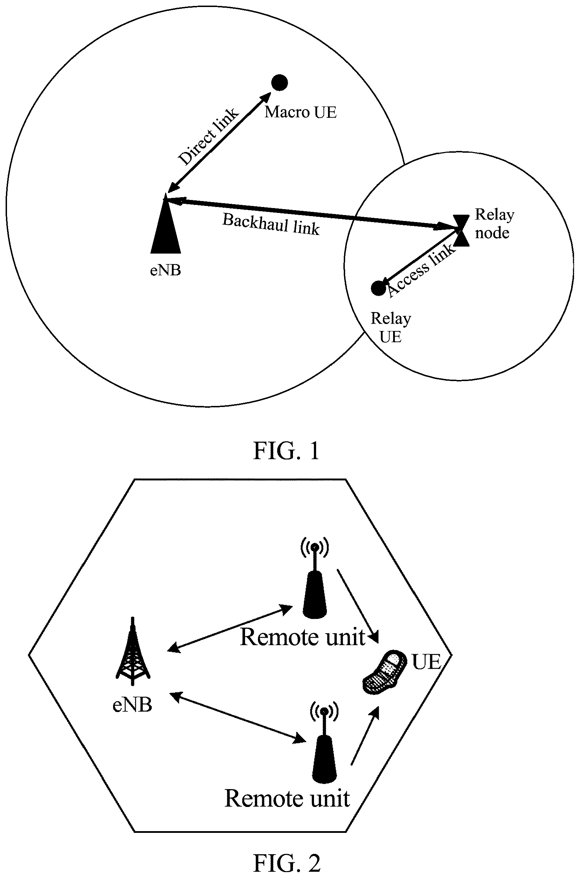

After Relay technology is introduced, the network architecture of LTE-A system is shown in FIG. 1, and the Relay node has the function of data relay through wireless link between other network nodes, and it may also has a control function. The wireless link between base station (eNB) and user equipment (UE) is a direct link, the wireless link between Relay node and UE is a access link, and the wireless link between eNB and Relay node is a backhaul link; wherein, the Relay node has an independent cell-ID which is visible to UE when it is an typel Relay; UE served directly by eNB is called Macro UE, and UE served by Relay is called Relay UE.

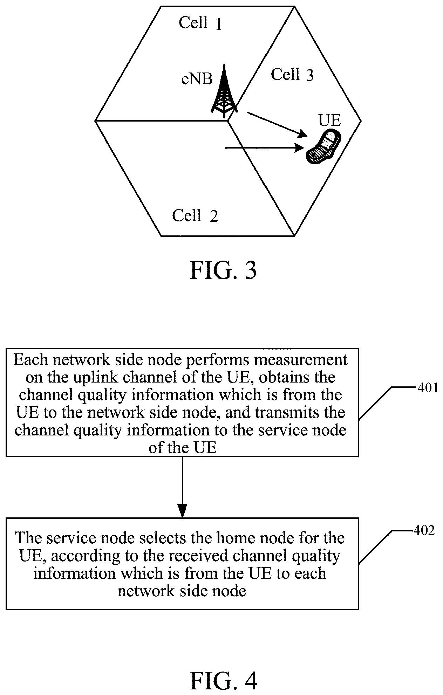

According to the definition from a perspective of technology, CoMP provides service for UE through collaboration of remote units which are connected through optical fibre, which is specifically: it provides service for the UE located on the edge of a cell through collaboration of a few remote units, and improves the communication quality of the edge of a cell; or several cells simultaneously provide coverage for the edge of a cell, so that the edge parts of several cells is overlapped, thus communication quality of the edge of a cell is improved. With the introduction of CoMP technology into LTE-A system, the way that multiple remote units configured within the cell under eNB collaborate and provide service for UE on the edge of the cell, is shown in FIG. 2, wherein the remote units are linked to eNB through wired connections, which only has a function of signal forwarding but doesn't have the independent cell-ID, i.e. they are invisible to the UE; it is shown in FIG. 3 that multiple cells simultaneously provide coverage for the junction of cells, and herein, the cells that provide the coverage for the junction of cells are called CoMP cells.

After Relay and CoMP technology are introduced, when UE is on the edge of cell, it is a very complex problem on how to select the home node for UE. At present, the method of determining the home node for UE is that: configure measurement sets which include several cells and/or nodes according to the measurement report of UE; UE measures the channel quality from self to each cell which is included in measurement sets respectively, and generate the measurement report according to the measured channel quality, then report it to the service nodes; the service node determine the home node of the UE according to the measurement report which is reported by UE, that is determining the eNB which will provide service for the UE.

If CoMP cells and/or Relay nodes are included in measurement sets, the foregoing method is adopted, then the specific steps of the service node determining the home node of the UE according to the measurement report which is reported by UE comprise: judging transmission sets of CoMP cells and/or Relay nodes according to the measurement report which is reported by UE. But compared with the conventional measurement and reporting of UE, more frequently measurement and reporting of UE are required in order for judging transmission sets of CoMP cells and/or Relay nodes, which increases the processing complexity of UE and needs to occupy a large quantity of resources of UE, moreover it is disadvantageous for saving battery power of UE and also causes more impact on the capacity of the existing uplink control channel. Especially, the selection of the home node is targeted at UE on the edge of a cell, and the channel quality is worse, and sending the measurement report will pay a higher price as it needs to carry out retransmission more than once and needs a larger transmitting power and so on; moreover, as there is no Relay nodes and remote units with independent cell-ID, it is invisible to the UE, and UE can not perform measurement, that is the foregoing method can not perform selection of the home node of UE for these nodes, which hinders the application of Relay and CoMP technology.

The document WO2008/088592A1 discloses a network element, which supports base stations with a shared pilot signal scrambling code.

The document EP1732269A1 discloses a handoff method connected with resource allocation in order to prevent QoS degradation, which may occur during or before/after a handoff on account of channel state change resulting from the mobility of a radio communication apparatus.

### Summary of the Invention

The present invention comprises a method according to claim 1 and system according to claim 5 for selecting a home node, for a user equipment which can reduce the processing complexity of the UE during the process of selecting the home node for the UE. Further improvements and embodiments are provided in the dependent claims. As an example, a method is provided for selecting a home node for user equipment, the method comprising:
each network side node performing measurement for an uplink channel of user equipment (UE), obtaining channel quality information from the UE to the network side node and sending the channel quality information to a service node of the UE;
the service node selecting the home node for the UE according to received channel quality information from the UE to each network side node.

Furthermore, before each network side node performs measurement for the uplink channel of the UE, the method further comprises:
the service node determining that the UE is located on the edge of a service cell according to a measurement report which is reported by UE, determining a cell where signals can cover a position in which the UE is located according to the measurement report which is reported by UE;
the service node sends a notification of performing measurement for the uplink channel of the UE to the network side nodes in determined part or all of cells.

Furthermore, the step of said each network side node performs measurement for uplink channel of the UE is specifically:
each network side node measuring related parameters of an uplink signal sent by UE according to ID of UE and time frequency resource of UE sending the uplink signal which are included in the notification received by self, which are as the channel quality information from the UE to the network side node; or,
each network side node measuring related parameters of a Sounding signal sent by UE according to ID of UE and time frequency resource and code information of UE sending the Sounding signal which are included in the notification received by self, which are as the channel quality information from the UE to the network side node; or,
each network side node monitoring uplink grant (UL grant) information sent by a service node to UE, obtaining the time frequency resource of UE sending the uplink signal, according to ID of UE which is included in the notification received by self; measuring related parameters of the uplink signal sent by UE in the obtained time frequency resource, which are as the channel quality information from the UE to the network side node;
wherein the related parameters include: signal strength, received power of reference signal, received quality of reference signal, channel quality index (CQI).

Furthermore, the step of said each network side node performing measurement for uplink channel of UE is specifically:
the network side node monitoring UL grant information sent by the service node to each UE respectively, obtaining the time frequency resource of each UE sending the uplink signal,
the network side node measuring related parameters of the uplink signal sent by each UE in the obtained time frequency resource respectively, which are as the channel quality information from the UE to the network side node; or,
the network side node monitoring the time frequency resource and code information of each UE sending the Sounding signal respectively, measuring related parameters of the Sounding signal sent by each UE, which are as the channel quality information from the UE to the network side node;
wherein the related parameters includes: signal strength, received power of reference signal, received quality of reference signal and CQI.

Furthermore, the step of sending the obtained channel quality information to a service node of the UE is specifically:
performing screening for measured channel quality information according to a preset threshold value, sending channel quality information which is greater than the threshold value and ID of UE corresponding to the channel quality information which is greater than the threshold value to the service node of the UE. As another example, a system is provided for selecting a home node for user equipment, the system comprising: a network side node and a service node; wherein,
the network side node is for performing measurement for an uplink channel of UE, obtaining channel quality information which is from UE to the network side node, and sending the channel quality information to the service node of the UE;
the service node is for selecting the home node for the UE according to received channel quality information which is from the UE to each network side node.

Furthermore, the service node comprises:
a selecting module which is for selecting the home node for the UE according to received channel quality information which is from the UE to each network side node.

Furthermore, the service node further comprises: a cell determining module and an informing module; wherein,
the cell determining module is for determining that the UE is on the edge of a service cell according to a measurement report which is reported by the UE, and determining a cell which covers a position where the UE is located according to the measurement report which is reported by the UE;
the informing module is for sending a notification of performing measurement on the uplink channel of the UE to network side nodes in determined part or all of cells.

Furthermore, the network side node comprises: a first measuring module and a first transmitting module; wherein
the first measuring module is for measuring related parameters of uplink signal sent by the UE according to ID of UE and time frequency resource of UE sending the uplink signal which are included in the notification received by self; or measuring related parameters of Sounding signal sent by UE according to ID of UE and time frequency resource and code information of UE sending the Sounding signal which are included in the notification received by self; or when a notification received by self does not include the time frequency resource of UE sending the uplink signal nor the time frequency resource and code information of UE sending the Sounding signal, monitoring the UL grant information sent by the service node to the UE according to ID of UE included in the notification received by itself, obtaining the time frequency resource of UE sending the uplink signal and measuring related parameters of uplink signal sent by UE in the obtained time frequency resource;
the first transmitting module is for using measured related parameters as the channel quality information from the UE to the network side node and sending the channel quality information to the selecting module.

Furthermore, the network side node comprises: a second measuring module and a second transmitting module; wherein,
the second measuring module is for monitoring UL grant information sent by the service node to each UE respectively, obtaining the time frequency resource of each UE sending the uplink signal; measuring related parameters of the uplink signal sent by each UE in the obtained time frequency resource respectively, which are as the channel quality information from the UE to the network side node; or for monitoring the time frequency resource and code information of each UE sending the Sounding signal, measuring related parameters of the Sounding signal sent by each UE, which are as the channel quality information from the UE to the network side node;
the second transmitting module is for performing screening on measured channel quality information according to a preset threshold value, and sending channel quality information which is greater than the threshold value and UE corresponding to channel quality information which is greater than the threshold value to a service node of the UE.

A method and system for selecting a home node for user equipment are provided as examples, the channel quality information which is from the UE to the network side node is obtained by the network side node performing measurement on the uplink channel of UE, and the home node is selected for the UE according to the channel quality information, so that during the process of selecting the home node, the UE need not perform measuring and reporting frequently in order to support a service node to judge the transmission set of the CoMP cell and/or Relay node, thus the complexity of processing UE is reduced during the process of selecting the home node for UE, plenty of resources of the UE and the battery power of the UE are saved, and the load of the uplink control channel is reduced.

### Brief Description of Drawings

FIG. 1 is a schematic diagram of network architecture of the LTE-A system;
FIG. 2 is a schematic diagram of providing service for UE on the edge of a cell through collaboration of a plurality of remote units;
FIG. 3 is a schematic diagram of multiple cells performing coverage for the junction of cells simultaneously;
FIG. 4 is a flow chart for implementing a method for selecting a home node for user equipment according to the embodiment 1 of the invention;
FIG. 5 is a structural schematic diagram of a system for selecting a home node for user equipment according to the embodiment 2 of the invention;
FIG. 6 is a structural schematic diagram of a system for selecting a home node for user equipment according to the embodiment 3 of the invention.

### Preferred Embodiments of the Present Invention

In the first embodiment of the invention, the implementation process of method for selecting a home node for user equipment (UE)is shown in FIG.4, comprising following steps:
Step 401: each network side node performs measurement on the uplink channel of the user equipment (UE), obtains the channel quality information which is from the UE to the network side node, and transmits the channel quality information to the service node of the UE.

If the current service cell of the UE is a relay cell, that is the UE resides in a Relay node with the independent cell-ID currently, the service node is that Relay node, otherwise, the service node is an eNB where UE resides; after the channel quality information which is from the UE to the network side node is obtained, the network side node can firstly perform initial processing of smoothing and setting a threshold value filter on the channel quality information, and then transmits it to the service node of the UE, and the transmitting mechanism might be a periodic reporting mechanism or triggering reporting mechanism.

Here, the step of said each network side node performing measurement on the uplink channel of the UE is specifically:
Step a1. The network side node monitors the uplink grant (UL grant) information to each UE sent by the service node respectively and obtains the time frequency resource of the uplink signal sent by each UE; wherein, the network side node can include: an eNB, a Relay node with an independent cell-ID, a Relay node without an independent cell-ID and a remote unit; the remote unit is a Base Band Unit (BBU) or Radio Remote Unit (RRU);
Step b1. The network side node respectively measures related parameters of uplink signal sent by UE in the obtained time frequency resource, which are as channel quality information from the UE to the network side node; wherein, the related parameters include: signal strength, received power of the reference signal, received quality of the reference signal, channel quality index (CQI) and so on, which can identify the parameters of channel quality from the UE to the network side node.

The step of said each network side node performing measurement on the uplink channel of the UE can further include that:
the network side node respectively monitors the time frequency resource and code information of each UE sending the Sounding signal, and measures related parameters of Sounding signal sent by each UE, which are as channel quality information from the UE to the network side node.

The step of obtaining the channel quality information from the UE to the network side node and sending channel quality information to the service node of the UE is specifically:
performing screening on measured channel quality information according to a preset threshold value, and sending channel quality information which is greater than the threshold value and ID of UE corresponding to channel quality information which is greater than the threshold value to a service node of the UE.

In one specific embodiment of the invention, before the step 401, the method further includes: informing network side node to perform measurement on the uplink channel of the user equipment (UE), and the step is specifically:
Step a2. The service node determines that the UE is located on the edge of a service cell according to a measurement report which is reported by UE, determining a cell where signals can cover a position in which UE is located according to the measurement report which is reported by UE;
Step b2. The service node sends a notification of performing measurement for uplink channel of the UE to the network side nodes in determined part or all of cells; the network side nodes in the cells can include one or more of an eNB, a Relay node with an independent cell-ID, a Relay node without an independent cell-ID and a remote unit;
wherein, in the step b2, the step of sending a notification of performing measurement for uplink channel of the UE to the network side nodes in determined part of cells is specifically that: according to a measurement report which is reported by UE, determine a cell with better channel quality for the UE, and send a notification of performing measurement for uplink channel of the UE to network side nodes in that cell with better channel quality for the UE. Correspondingly, said each network side node performing measurement for uplink channel of the UE in the step 401 is specifically:
each network side node measuring related parameters of the uplink signal sent by UE according to ID of UE and time frequency resource of UE sending the uplink signal which are included in the notification received by self, which are as the channel quality information from the UE to the network side node; or,
the each network side node measures related parameters of Sounding signal sent by UE according to ID of UE which is carried by a inform received by itself, time frequency resource and code information of UE sending Sounding signal, uses it as channel quality information from the UE to the network side node; or,
when a notification received by self does not include the time frequency resource of UE sending the uplink signal nor the time frequency resource and code information of UE sending the Sounding signal, each network side node monitoring the UL grant information sent by the service node to the UE according to ID of UE included in the notification received by itself, obtaining the time frequency resource of UE sending the uplink signal; measuring related parameters of uplink signal sent by UE in the obtained time frequency resource, which are as the channel quality information from the UE to the network side node ;
wherein, the related parameters include: signal strength, received power of the reference signal, received quality of the reference signal, channel quality index (CQI) and so on, which can identify the parameters of channel quality from the UE to the network side node.

Step 402: said service node selects a home node for the UE according to the received channel quality information which is from UE to each network side node.

Wherein, a specific method for selecting a home node for UE is:
comparing the channel quality information which is from UE to the network side node, selecting a network node with good channel quality and free resource as a home node of the UE; or,
determining all the UE belonging to the network side node according to the channel quality information which is greater than the threshold value and the ID of UE corresponding to channel quality information which is greater than the threshold value sent from the network side node.

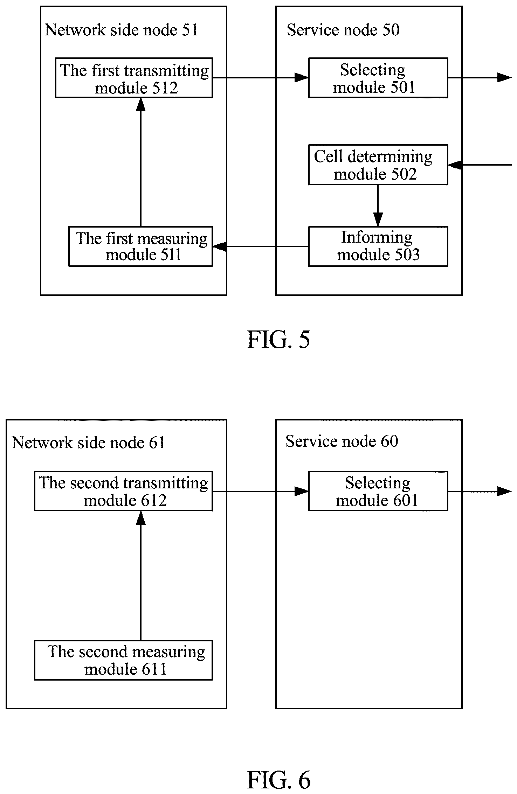

In the second embodiment of the invention, the structure of system for selecting a home node for user equipment (UE) is shown in FIG.5, including: a network side node 51 and a service node 50; wherein,
the network side node 51 is used to perform measurement on the uplink channel of the UE, obtain channel quality information which is from UE to the network side node, and send it to the service node 50 of the UE;
the service node 50 is used to select a home node for the UE according to the received channel quality information which is from UE to each network side node.

Wherein, said service node 50 includes:
a selecting module 501, which is used to select a home node for the UE according to the received channel quality information which is from UE to each network side node.

Furthermore, said service node also includes: a cell determining module 502 and an informing module 503; wherein,
the cell determining module 502 is used to determine that the UE is on the edge of a service cell according to a measurement report which is reported by UE, then to determine a cell which covers a position where the UE is located according to the measurement report;
the informing module 503 is used to send a notification of performing measurement for uplink channel of the UE to the network side nodes 51 in determined part or all of cells.

Correspondingly, said network side node 51 includes: a first measuring module 511 and a first transmitting module 512; wherein,
the first measuring module 511 is used to measure related parameters of the uplink signal sent by the UE according to ID of UE and time frequency resource of UE sending the uplink signal which are included in the notification received by self; or to measure related parameters of the Sounding signal sent by UE according to ID of UE and time frequency resource and code information of UE sending the Sounding signal which are included in the notification received by self; or when a notification received by self does not include the time frequency resource of UE sending the uplink signal nor the time frequency resource and code information of UE sending the Sounding signal, monitor the UL grant information sent by the service node to the UE according to ID of UE included in the notification, obtain the time frequency resource of UE sending the uplink signal and measure related parameters of the uplink signal sent by UE in the obtained time frequency resource;
the first transmitting module 512 is used to send the measured related parameters which are as the channel quality information from UE to the network side node to the selecting module 501.

In the third embodiment of the invention, the structure of system for selecting a home node for user equipment is shown in FIG.6, including: a network side node 61 and a service node 60; wherein,
the network side node 61 is used to perform measurement on the uplink channel of the UE, obtain the channel quality information from UE to the network side node and send the channel quality information to the service node 60 of the UE;
the service node 60 is used to select a home node for the UE according to the received channel quality information from the UE to each network side node.

Wherein, said service node 60 includes:
a selecting module 601 which is used to select a home node for the UE according to the received channel quality information from the UE to each network side node.

Said network side nodes include: a second measuring module 611 and a second transmitting module 612; wherein,
the second measuring module 611 is used to monitor UL grant information sent by the service node to each UE respectively, and obtain the time frequency resource of each UE sending the uplink signal; to measure related parameters of the uplink signal sent by each UE in the obtained time frequency resource respectively, which are as the channel quality information from the UE to the network side node; or to monitor the time frequency resource and code information of each UE sending the Sounding signal, and measure related parameters of the Sounding signal sent by each UE, which are as the channel quality information from the UE to the network side node;
the second transmitting module 612 is used to perform screening on the measured channel quality information according to the preset threshold value, send the channel quality information greater than the threshold value and the UE corresponding to the channel quality information greater than the threshold value to the service node 60 of the UE.

The mentioned above are only preferred embodiments of the present invention, and not used to limit the protection scope of the invention.

## Claims

1. A method for selecting a home node for user equipment, the method comprising:
each network side node performing measurement for an uplink channel of user equipment, UE, obtaining channel quality information from the UE to said each network side node and sending the channel quality information to a service node of the UE (401);
the service node selecting the home node for the UE according to received channel quality information from the UE to said each network side node (402); wherein the home node refers to a node which will provide service for the UE;
**characterized in that** the step of said each network side node performing measurement for the uplink channel of UE comprises:
the network side node monitoring UL grant information sent by the service node to each UE respectively, obtaining time frequency resource of each UE sending an uplink signal,
the network side node measuring related parameters of the uplink signal sent by each UE in the obtained time frequency resource respectively, and using measured related parameters as the channel quality information from the UE to the network side node;
wherein the related parameters include: signal strength, received power of a reference signal, received quality of a reference signal and channel quality index, CQI.

2. The method for selecting a home node for user equipment according to claim 1, wherein, before each network side node performs measurement for the uplink channel of UE, the method further comprises:
if the service node determines that the UE is located on the edge of a service cell according to a measurement report which is reported by the UE, determining a cell where signals can cover a position in which the UE is located;
the service node sends a notification of performing measurement for the uplink channel of the UE to a network side node in determined part or all of cells which can cover the UE.

3. The method for selecting a home node for user equipment according to claim 2, wherein the step of said each network side node performing measurement for the uplink channel of the UE is specifically:
said each network side node measuring related parameters of an uplink signal sent by UE according to ID of the UE and time frequency resource of the UE sending the uplink signal which are included in the notification received by said each network side node, and using measured related parameters as the channel quality information from the UE to the network side node; or
said each network side node measuring related parameters of a Sounding signal sent by UE according to ID of the UE and time frequency resource and code information of the UE sending the Sounding signal which are included in the notification received by said each network side node, and using measured related parameters as the channel quality information from the UE to the network side node; or
said each network side node monitoring uplink grant (UL grant) information sent by the service node to UE according to ID of UE which is included in the notification received by said each network side node, obtaining the time frequency resource of UE sending the uplink signal; measuring related parameters of the uplink signal sent by the UE in the obtained time frequency resource, and using measured related parameters as the channel quality information from the UE to the network side node.

4. The method for selecting a home node for user equipment according to claim 1 or 3, wherein the step of said each network side node sending obtained channel quality information to the service node of the UE is specifically:
performing screening for measured channel quality information according to a preset threshold value, sending channel quality information which is greater than the preset threshold value and ID of UE corresponding to the channel quality information which is greater than the preset threshold value to the service node of the UE.

5. A system for selecting a home node for user equipment, the system comprising: a network side node (51, 61) and a service node (50, 60); wherein,
the network side node (51, 61) is for performing measurement for an uplink channel of user equipment, UE, obtaining channel quality information which is from the UE to the network side node, and sending the channel quality information to the service node (50, 60) of the UE;
the service node (50, 60) is for selecting the home node for the UE according to received channel quality information which is from the UE to each network side node (51, 61);
wherein, the service node (50, 60) comprises:
a selecting module (501), which is for selecting the home node for the UE according to the received channel quality information which is from the UE to each network side node; wherein the home node refers to a node which will provide service for the UE;
**characterized in that** the network side node (51, 61) comprises: a second measuring module (611) and a first transmitting module (512); wherein
the second measuring module (611) is for monitoring UL grant information sent by the service node to each UE respectively, obtaining time frequency resource of each UE sending an uplink signal; measure related parameters of the uplink signal sent by each UE in the obtained time frequency resource respectively;
the first transmitting module (512) is for using measured related parameters as the channel quality information from the UE to the network side node and sending the channel quality information to the selecting module.

6. The system selecting a home node for user equipment according to claim 5, wherein, the service node (50, 60) further comprises: a cell determining module (502) and an informing module (503); wherein,
the cell determining module (502) is for determining whether the UE is on the edge of a service cell according to a measurement report which is reported by the UE, and if yes, determining a cell which covers a position where the UE is located according to the measurement report which is reported by the UE;
the informing module (503) is for sending a notification of performing measurement on the uplink channel of the UE to a network side node in determined part or all of cells which cover the UE.

7. The system selecting a home node for user equipment according to claim 6, wherein, the network side node (51, 61) further comprises: a first measuring module (511); wherein,
the first measuring module (511) is for measuring related parameters of an uplink signal sent by UE according to ID of the UE and time frequency resource of the UE sending the uplink signal which are included in the notification received by said network side node; or measuring related parameters of a Sounding signal sent by UE according to ID of the UE and time frequency resource and code information of the UE sending the Sounding signal which are included in the notification received by said network side node; or when the notification received by said network side node does not include the time frequency resource of UE sending the uplink signal nor the time frequency resource and code information of UE sending the Sounding signal, monitoring UL grant information sent by the service node to UE according to ID of UE included in the notification received by said network side node, obtaining the time frequency resource of the UE sending the uplink signal and measuring related parameters of the uplink signal sent by the UE in the obtained time frequency resource.

8. The system selecting a home node for user equipment according to claim 5 or 7, wherein, the network side node comprises: a second transmitting module (612); wherein,
the second transmitting module (612) is for performing screening on measured channel quality information according to a preset threshold value, and sending channel quality information which is greater than the threshold value and ID of UE corresponding to the channel quality information which is greater than the threshold value to the service node of the UE.

## Patentansprüche

1. Verfahren zum Auswählen eines Heimknotens für ein Benutzergerät, wobei das Verfahren umfasst:
Durchführen von Messungen für einen Uplink-Kanal des Benutzergeräts, UE, durch jeden Netzwerkseitenknoten, Einholen von Kanalqualitätsinformationen vom UE an die jeweiligen Netzwerkseitenknoten und Senden der Kanalqualitätsinformationen an einen Dienstknoten des UE (401);
Auswählen des Heimknoten für das UE durch den Dienstknoten entsprechend den empfangenen Kanalqualitätsinformationen von dem UE zu dem jeweiligen Netzwerkseitenknoten (402); wobei der Knoten Heimknoten genannt wird, der Dienste für das UE bereitstellt;
**dadurch gekennzeichnet, dass** der Schritt des Durchführens von Messungen durch jeden Netzwerkseitenknoten für den Uplink-Kanal des UE umfasst:
Überwachen der UL-Grant-Informationen, die vom Dienstknoten an jedes UE gesendet werden, durch den Netzwerkseitenknoten, Erhalten der Zeitfrequenzressourcen für jedes UE, das ein Uplink-Signal sendet,
Messen der zugehörigen Parameter des Uplink-Signals, das von jedem UE in der jeweils erhaltenen Zeitfrequenzressource gesendet wurde, durch den Netzwerkseitenknoten, und Verwenden der gemessenen zugehörigen Parameter als Kanalqualitätsinformation von dem UE zum Netzwerkseitenknoten;
wobei die zugehörigen Parameter umfassen: Signalstärke, empfangene Leistung eines Referenzsignals, empfangene Qualität eines Referenzsignals und Kanalqualitätsindex, CQI.

2. Verfahren zum Auswählen eines Heimknotens für ein Benutzergerät nach Anspruch 1, wobei das Verfahren, bevor jeder Netzwerkseitenknoten Messungen für den Uplink-Kanal des UE durchführt, weiterhin umfasst:
Bestimmen, wenn der Dienstknoten feststellt, dass sich das UE nach einem von dem UE gemeldeten Messbericht am Rand einer Dienstzelle befindet, einer Zelle, in der Signale eine Position abdecken können, an der sich das UE befindet;
sendet der Dienstknoten eine Benachrichtigung über die Durchführung einer Messung für den Uplink-Kanal des UE an einen Netzwerkseitenknoten im bestimmten Teil der oder in allen Zellen, die das UE abdecken können.

3. Verfahren zum Auswählen eines Heimknotens für ein Benutzergerät nach Anspruch 2, wobei der Schritt des Durchführens von Messungen durch jeden Netzwerkseitenknoten für einen Uplink-Kanal des UE, konkret ist:
Messen der zugehörigen Parameter eines Uplink-Signals, das vom UE gemäß der ID des UE gesendet wird, und der Zeitfrequenzressourcen des UE, das das Uplink-Signal sendet, die in der Benachrichtigung enthalten ist, die von jedem der Netzwerkseitenknoten empfangen wird, durch jeden Netzwerkseitenknoten, und Verwenden der gemessenen zugehörigen Parameter als Kanalqualitätsinformation von dem UE an den Netzseitenknoten; oder
Messen der zugehörigen Parameter eines vom UE gesendeten Sondierungssignals gemäß der ID des UE und der Zeitfrequenzressourcen und Codeinformationen des UE, das das Sondierungssignal sendet, die in der Benachrichtigung enthalten sind, die von jedem der Netzwerkseitenknoten empfangen wird, durch jeden Netzwerkseitenknoten, und Verwenden der gemessenen zugehörigen Parameter als Kanalqualitätsinformationen vom UE an den Netzseitenknoten; oder
Überwachen der Uplink-Grant (UL Grant)-Informationen, die durch den Dienstknoten an das UE gemäß der ID des UE, die in der von dem jeweiligen Netzwerkseitenknoten empfangenen Benachrichtigung enthalten ist, gesendet wurden, durch jeden Netzwerkseitenknoten, Erhalten von Zeitfrequenzressourcen des UE, das das Uplink-Signal sendet; Messen von zugehörigen Parametern des Uplink-Signals, das von dem UE in den erhaltenen Zeitfrequenzressourcen gesendet wird, und Verwenden der gemessenen zugehörigen Parameter als Kanalqualitätsinformation von dem UE an den Netzknoten.

4. Verfahren zum Auswählen eines Heimknotens für ein Benutzergerät nach Anspruch 1 oder 3, wobei der Schritt des Sendens von erhaltenen Kanalqualitätsinformationen an den Dienstknoten der UE durch jeden Netzwerkseitenknoten, konkret ist:
Durchführen einer Überprüfung der gemessenen Kanalqualitätsinformationen nach einem voreingestellten Schwellenwert, Senden von Kanalqualitätsinformationen, die größer als der voreingestellte Schwellenwert sind und der ID des UE entsprechend der Kanalqualitätsinformationen, die größer als der voreingestellte Schwellenwert sind, an den Dienstknoten der UE.

5. System zum Auswählen eines Heimknotens für ein Benutzergerät, wobei das System umfasst: einen Netzwerkseitenknoten (51, 61) und einen Dienstknoten (50, 60); wobei
der Netzwerkseitenknoten (51, 61) zur Durchführung der Messung eines Uplink-Kanals eines Benutzergeräts, UE, für die Gewinnung von Kanalqualitätsinformationen von dem UE zum Netzwerkseitenknoten, und zum Senden der Kanalqualitätsinformationen an den Dienstknoten (50, 60) des UE dient;
der Dienstknoten (50, 60) zur Auswahl des Heimknotens für das UE gemäß empfangenen Kanalqualitätsinformationen dient, die von dem UE zu jedem Netzwerkseitenknoten (51, 61) gesendet werden;
wobei der Dienstknoten (50, 60) umfasst:
ein Auswahlmodul (501), das zum Auswählen des Heimknotens für das UE gemäß den empfangenen Kanalqualitätsinformationen vom UE zu jedem Netzwerkseitenknoten dient; wobei Heimknoten der Knoten heißt, der Dienste für das UE bereitstellt;
**dadurch gekennzeichnet, dass** der Netzwerkseitenknoten (51, 61) umfasst: ein zweites Messmodul (611) und ein erstes Sendemodul (512); wobei
das zweite Messmodul (611) zur Überwachung von UL-Grant-Informationen, die vom Dienstknoten an jedes entsprechende UE gesendet werden, zum Erhalten der Zeitfrequenzressource jedes UE, das ein Uplink-Signal sendet; zum Messen von zugehörigen Parametern des von jedem UE gesendeten Uplink-Signals in der erhaltenen Zeitfrequenzressource dient;
das erste Sendemodul (512) zur Verwendung von gemessenen zugehörigen Parametern als Kanalqualitätsinformationen von dem UE zum Netzwerkseitenknoten und zum Senden der Kanalqualitätsinformationen an das Auswahlmodul dient.

6. System zum Auswählen eines Heimknotens für ein Benutzergerät nach Anspruch 5, wobei der Dienstknoten (50, 60) weiterhin umfasst: ein Zellenbestimmungsmodul (502) und ein Informierungsmodul (503); wobei
das Zellenbestimmungsmodul (502) zur Bestimmung, ob sich das UE am Rand einer Dienstzelle gemäß einem von dem UE gemeldeten Messbericht befindet, und wenn ja, zur Bestimmung einer Zelle dient, die eine Position abdeckt, an der sich das UE gemäß dem von dem UE gemeldeten Messbericht befindet;
das Informierungsmodul (503) zum Senden einer Benachrichtigung über die Durchführung einer Messung auf dem Uplink-Kanal des UE an einen Netzwerkseitenknoten in dem bestimmten Teil der oder in allen Zellen, die das UE abdecken, dient.

7. System zum Auswählen eines Heimknotens für ein Benutzergerät nach Anspruch 6, wobei der Netzwerkseitenknoten (51, 61) weiterhin umfasst: ein erstes Messmodul (511); wobei
das erste Messmodul (511) zum Messen zugehöriger Parameter eines vom UE gesendeten Uplink-Signals gemäß der ID des UE und der Zeitfrequenzressourcen des UE, die das Uplink-Signal sendet, welche in der Benachrichtigung enthalten sind, die von dem Netzseitenknoten empfangen wird, dient; oder zum Messen zugehöriger Parameter eines vom UE gesendeten Sondierungssignals gemäß der ID des UE und der Zeitfrequenzressourcen und Codeinformationen des UE, das das Sondierungssignal sendet, welche in der Benachrichtigung enthalten sind, die durch den Netzseitenknoten empfangen wird, dient; oder wenn die Benachrichtigung, die durch den Netzwerkseitenknoten empfangen wird, weder die Zeitfrequenzressource vom UE, die das Uplink-Signal sendet, noch die Zeitfrequenzressource und Code-Information vom UE, die das Sondierungssignal sendet, enthält, zur Überwachung der UL-Grant-Informationen, die vom Dienstknoten an das UE gemäß der ID des UE gesendet werden, die in der Benachrichtigung enthalten ist, die von dem Netzwerk-Nebenknoten empfangen wird, und zum Einholen der Zeitfrequenzressourcen des UE, die das Uplink-Signal sendet und Messen von zugehörigen Parametern des Uplink-Signals, die von dem UE in den erhaltenen Zeitfrequenzressourcen gesendet wird, dient.

8. System zum Auswählen eines Heimknotens für ein Benutzergerät nach Anspruch 5 oder 7, wobei der Netzwerkseitenknoten umfasst: ein zweites Sendemodul (612); wobei
das zweite Sendemodul (612) zum Durchführen einer Überprüfung von gemessenen Kanalqualitätsinformationen gemäß einem vorgegebenen Schwellenwert und zum Senden von Kanalqualitätsinformationen, die größer als der Schwellenwert sind und der ID des UE, entsprechend der Kanalqualitätsinformationen, die größer als der Schwellenwert sind, an den Dienstknoten des UE dient.

## Revendications

1. Procédé de sélection d'un noeud local pour un équipement utilisateur, le procédé comprenant:
chaque noeud côté réseau exécutant une mesure pour un canal de liaison montante d'un équipement utilisateur, UE, obtenant des informations de qualité de canal de l'UE vers chaque noeud côté réseau précité et envoyant les informations de qualité de canal à un noeud de service de l'UE (401);
le noeud de service sélectionnant le noeud local pour l'UE selon les informations de qualité de canal reçues de l'UE vers chaque noeud côté réseau précité (402); dans lequel le noeud local désigne un noeud qui fournira un service pour l'UE;
**caractérisé en ce que** l'étape où chaque noeud côté réseau précité exécute une mesure pour le canal de liaison montante de l'UE comprend:
le noeud côté réseau surveillant des informations d'autorisation de liaison montante envoyées par le noeud de service à chaque UE respectivement, obtenant une ressource de fréquence temporelle de chaque UE envoyant un signal de liaison montante,
le noeud côté réseau mesurant les paramètres associés du signal de liaison montante envoyé par chaque UE dans la ressource de fréquence temporelle respectivement, et utilisant les paramètres associés mesurés en tant qu'informations de qualité de canal de l'UE au noeud côté réseau;
dans lequel les paramètres associés comprennent: la force du signal, la puissance reçue d'un signal de référence, la qualité reçue d'un signal de référence et l'indicateur de qualité de canal, CQI.

2. Procédé de sélection d'un noeud local pour un équipement utilisateur selon la revendication 1, dans lequel, avant que chaque noeud côté réseau n'exécute une mesure pour le canal de liaison montante de l'UE, le procédé comprend en outre:
si le noeud de service détermine que l'UE se situe sur le bord d'une cellule de service selon un rapport de mesure qui est indiqué par l'UE, la détermination d'une cellule où des signaux peuvent couvrir une position dans laquelle se trouve l'UE;
le noeud de service envoie une notification de l'exécution de la mesure pour le canal de liaison montante de l'UE à un noeud côté réseau dans une partie déterminée ou la totalité des cellules qui peuvent couvrir l'UE.

3. Procédé de sélection d'un noeud local pour un équipement utilisateur selon la revendication 2, dans lequel l'étape où chaque noeud côté réseau précité exécute une mesure pour le canal de liaison montante de l'UE est spécifiquement:
chaque noeud côté réseau précité mesurant les paramètres associés d'un signal de liaison montante envoyé par l'UE selon l'identificateur de l'UE et la ressource de fréquence temporelle de l'UE envoyant le signal de liaison montante, lesquels sont inclus dans la notification reçue par chaque noeud côté réseau précité, et utilisant les paramètres associés mesurés en tant qu'informations de qualité de canal de l'UE au noeud côté réseau; ou
chaque noeud côté réseau précité mesurant les paramètres associés d'un signal de sondage envoyé par l'UE selon l'identificateur de l'UE et la ressource de fréquence temporelle et les informations de code de l'UE envoyant le signal de sondage, lesquels sont inclus dans la notification reçue par chaque noeud côté réseau précité, et utilisant les paramètres associés mesurés en tant qu'informations de qualité de canal de l'UE au noeud côté réseau; ou
chaque noeud côté réseau précité surveillant les informations d'autorisation en liaison montante (autorisation UL) envoyées par le noeud de service à l'UE selon l'identificateur de l'UE qui est inclus dans la notification reçue par chaque noeud côté réseau précité, obtenant la ressource de fréquence temporelle de l'UE envoyant le signal de liaison montante; mesurant les paramètres associés du signal de liaison montante envoyé par l'UE dans la ressource de fréquence temporelle, et utilisant les paramètres associés mesurés en tant qu'informations de qualité de canal de l'UE au noeud côté réseau;

4. Procédé de sélection d'un noeud local pour un équipement utilisateur selon la revendication 1 ou 3, dans lequel l'étape où chaque noeud côté réseau précité envoie les informations de qualité de canal obtenues au noeud de service de l'UE est spécifiquement:
l'exécution d'un criblage à la recherche d'informations de qualité de canal mesurées selon une valeur seuil prédéfinie, l'envoi des informations de qualité de canal qui sont supérieures à la valeur seuil prédéfinie et de l'identificateur de l'UE correspondant aux informations de qualité de canal qui sont supérieures à la valeur seuil prédéfinie au noeud de service de l'UE.

5. Système de sélection d'un noeud local pour un équipement utilisateur, le système comprenant: un noeud côté réseau (51, 61) et un noeud de service (50, 60); dans lequel,
le noeud côté réseau (51, 61) permet l'exécution de la mesure pour un canal de liaison montante d'un équipement utilisateur, UE, l'obtention des informations de qualité de canal qui vont de l'UE au noeud côté réseau, et l'envoi des informations de qualité de canal au noeud de service (50, 60) de l'UE;
le noeud de service (50, 60) permet la sélection du noeud local pour l'UE selon les informations de qualité de canal reçues qui vont de l'UE à chaque noeud côté réseau (51,61);
dans lequel, le noeud de service (50, 60) comprend:
un module de sélection (501), qui permet la sélection du noeud local pour l'UE selon les informations de qualité de canal reçues qui vont de l'UE à chaque noeud côté réseau; dans lequel le noeud local désigne un noeud qui fournira un service pour l'UE;
**caractérisé en ce que** le noeud côté réseau (51, 61) comprend: un second module de mesure (611) et un premier module de transmission (512); dans lequel
le second module de mesure (611) permet la surveillance des informations d'autorisation de liaison montante envoyées par le noeud de service à chaque UE respectivement, l'obtention d'une ressource de fréquence temporelle de chaque UE envoyant un signal de liaison montante; la mesure des paramètres associés du signal de liaison montante envoyé par chaque UE dans la ressource de fréquence temporelle obtenue respectivement;
le premier module de transmission (512) permet l'utilisation des paramètres associés mesurés en tant qu'informations de qualité de canal de l'UE au noeud côté réseau et l'envoi des informations de qualité de canal au module de sélection.

6. Système de sélection d'un noeud local pour un équipement utilisateur selon la revendication 5, dans lequel le noeud de service (50, 60) comprend en outre: un module de détermination de cellule (502) et un module d'information (503); dans lequel,
le module de détermination de cellule (502) permet de déterminer si l'UE se trouve sur le bord d'une cellule de service selon un rapport de mesure qui est indiqué par l'UE, et dans l'affirmative, de déterminer une cellule qui couvre une position où l'UE se trouve selon le rapport de mesure qui est indiqué par l'UE;
le module d'information (503) permet d'envoyer une notification d'exécution de la mesure sur le canal de liaison montante de l'UE à un noeud côté réseau dans une partie déterminée ou la totalité des cellules qui couvrent l'UE.

7. Système de sélection d'un noeud local pour un équipement utilisateur selon la revendication 6, dans lequel le noeud côté réseau (51, 61) comprend en outre: un premier module de mesure (511); dans lequel,
le premier module de mesure (511) permet la mesure des paramètres associés d'un signal de liaison montante envoyé par l'UE selon l'identificateur de l'UE et la ressource de fréquence temporelle de l'UE envoyant le signal de liaison montante, lesquels sont inclus dans la notification reçue par ledit noeud côté réseau; ou la mesure des paramètres associés d'un signal de sondage envoyé par l'UE selon l'identificateur de l'UE et la ressource de fréquence temporelle et les informations de code de l'UE envoyant le signal de sondage, lesquels sont inclus dans la notification reçue par ledit noeud côté réseau; ou lorsque la notification reçue par ledit noeud côté réseau n'inclut ni la ressource de fréquence temporelle de l'UE envoyant le signal de liaison montante ni la ressource de fréquence temporelle et les informations de code de l'UE envoyant le signal de sondage, la surveillance des informations d'autorisation de liaison montante envoyées par le noeud de service à l'UE selon l'identificateur de l'UE inclus dans la notification reçue par ledit noeud côté réseau, l'obtention de la ressource de fréquence temporelle de l'UE envoyant le signal de liaison montante et la mesure des paramètres associés du signal de liaison montante envoyé par l'UE dans la ressource de fréquence temporelle obtenue.

8. Système de sélection d'un noeud local pour un équipement utilisateur selon la revendication 5 ou 7, dans lequel, le noeud côté réseau comprend: un second module de transmission (612); dans lequel,
le second module de transmission (612) est destiné à l'exécution d'un criblage sur les informations de qualité de canal mesurées selon une valeur seuil prédéfinie, et l'envoi des informations de qualité de canal qui sont supérieures à la valeur seuil et l'identificateur de l'UE correspondant aux informations de qualité de canal qui sont supérieures à la valeur seuil au noeud de service de l'UE.
